# EUROPÄISCHE PATENTANMELDUNG

(11) **EP 4 549 082 A1**
(43) Veröffentlichungstag der Anmeldung: **07.05.2025**
(21) Anmeldenummer: 24201155.9
(22) Anmeldetag: 18.09.2024
(51) Int. Cl.: B23Q 1/03, B23Q 17/22

(54) **SPANNSYSTEM UMFASSEND EINE SPANNVORRICHTUNG UND EINE KONSOLE**

(30) Priorität: 30.10.2023 DE 102023130003
(71) Anmelder: J. Schmalz GmbH, 72293 Glatten (DE)
(72) Erfinder: Stockburger, Ralf, 72293 Glatten (DE)
(74) Vertreter: DREISS Patentanwälte PartG mbB

(57) **Zusammenfassung**

Die Erfindung betrifft ein Spannsystem (100), umfassend eine Spannvorrichtung (10) zum Fixieren eines Werkstücks, und eine Konsole (50) mit einem sich entlang einer Konsolenlängsrichtung (54) erstreckenden Konsolengehäuse (52), wobei die Spannvorrichtung (10) auf das Konsolengehäuse (52) aufsetzbar ist und im aufgesetzten Zustand entlang der Konsolenlängsrichtung verschiebbar ist, wobei die Konsole eine Mehrzahl von elektrisch betriebenen Magnetfelderzeugungseinrichtungen (58) aufweist, wobei die Magnetfelderzeugungseinrichtungen entlang der Konsolenlängsrichtung verteilt angeordnet sind, und wobei die Spannvorrichtung eine Sensoreinrichtung (18) zum Detektieren eines von den Magnetfelderzeugungseinrichtungen erzeugten Magnetfeldes umfasst. Die Erfindung betrifft auch eine Spannvorrichtung und eine Konsole zur Verwendung in einem solchen Spannsystem. Die Erfindung betrifft auch ein Konsolensystem umfassend eine Konsole und einen Konsolenträger.

## Beschreibung

Die Erfindung betrifft ein Spannsystem umfassend eine Spannvorrichtung und eine Konsole, auf welche die Spannvorrichtung aufsetzbar ist und im aufgesetzten Zustand entlang einer Konsolenlängsrichtung verschiebbar ist.

Spannsysteme mit Konsole und darauf angeordneter Spannvorrichtung sind aus dem Stand der Technik bekannt, beispielsweise aus der DE 10 2019 107 477 A1. Derartige Spannsysteme kommen beispielsweise bei der spanenden oder materialabtragenden Bearbeitung von Werkstücken wie Holzwerkstoffen oder Kunststoffwerkstoffen oder Ähnlichem zum Einsatz, insbesondere dann, wenn die Werkstücke von mehreren Seiten bearbeitet werden müssen. Durch Positionieren der Spannvorrichtung auf der Konsole ist ein Bearbeiten an unterschiedlichen Positionen möglich.

Um Kollisionen der Spannvorrichtung bspw. mit Bearbeitungswerkzeugen einer Bearbeitungsmaschine zu vermeiden, besteht der Wunsch, eine aktuelle Position der Spannvorrichtung entlang der Konsolenlängsachse überwachen zu können. Zu diesem Zweck ist es beispielsweise bekannt, die Spannvorrichtung mit einem optischen Marker, bspw. Barcode, auszustatten und diesen dann mittels einer Kamera zu erfassen. Derartige optische Systeme sind allerdings für einen Einsatz in einer staubigen Arbeitsumgebung, bspw. beim Spanen oder Fräsen, nur bedingt geeignet oder erfordern regelmäßig einen hohen Reinigungsaufwand.

Der Erfindung liegt die Aufgabe zugrunde, bei einem Spannsystem der eingangs genannten Art auf einfache und kostengünstige Weise eine zuverlässige, insbesondere automatisierte, Positionsbestimmung der Spannvorrichtung auf der Konsole zu ermöglichen.

Diese Aufgabe wird erfindungsgemäß durch ein Spannsystem mit den Merkmalen des Anspruchs 1 gelöst. Das Spannsystem umfasst eine Spannvorrichtung zum Spannen eines Werkstücks und eine Konsole, auf welche die Spannvorrichtung aufsetzbar oder aufgesetzt ist. Die Konsole weist ein Konsolengehäuse auf, welches sich entlang einer Konsolenlängsachse erstreckt. Die Spannvorrichtung ist auf das Konsolengehäuse aufsetzbar oder aufgesetzt und im aufgesetzten Zustand entlang der Konsolenlängsrichtung verschiebbar. Das Konsolengehäuse kann eine Führungseinrichtung, z.B. Führungsnut, für die Spannvorrichtung aufweisen. Insbesondere weist das Konsolengehäuse eine Konsolenoberseite auf, auf welche die Spannvorrichtung mit einer Unterseite aufsetzbar ist. Das Konsolengehäuse weist insbesondere außerdem zwei Konsolenlängsseiten mit entsprechenden Seitenwänden auf, welche beispielhaft orthogonal zur Konsolenoberseite orientiert sind.

Die Konsole weist eine Mehrzahl von elektrisch betriebenen Magnetfelderzeugungseinrichtungen jeweils zum Erzeugen eines Magnetfeldes auf. Die Magnetfelderzeugungseinrichtungen sind insbesondere voneinander unabhängig (einzeln) aktivierbar und deaktivierbar. Die Magnetfelderzeugungseinrichtungen sind entlang der Konsolenlängsrichtung verteilt angeordnet. Insbesondere sind die Magnetfelderzeugungseinrichtungen entlang der Konsolenlängsrichtung in einem Abstand zueinander angeordnet, vorzugsweise zwischen 1 und 10 cm, weiter vorzugswiese zwischen 1 und 7 cm.

Die Spannvorrichtung weist eine Sensoreinrichtung zum Detektieren eines von einer jeweiligen Magnetfelderzeugungseinrichtung (bei Aktivierung) erzeugten Magnetfeldes. Die Sensoreinrichtung umfasst vorzugsweise einen Magnetfeldsensor, insbesondere Hall-Sensor.

Eine solche Ausgestaltung mit Magnetfelderzeugungseinrichtungen und Sensoreinrichtung ermöglicht auf einfache Weise, eine aktuelle Position der Spannvorrichtung auf der Konsole zu bestimmen. Das Spannsystem umfasst insofern vorzugsweise eine Positionsdetektionseinrichtung zur Bestimmung einer Position der Spannvorrichtung entlang der Konsolenlängsrichtung, wobei die Positionsdetektionseinrichtung die Magnetfelderzeugungseinrichtung und die Sensoreinrichtung umfasst. Wie nachfolgend noch im Detail erläutert, beruht eine Positionsdetektion insbesondere auf einer Auswertung eines von der Sensoreinrichtung detektierten Magnetfeldes. Beispielsweise können die Magnetfelderzeugungseinrichtung nacheinander aktiviert werden. Da eine Stärke eines von einer Magnetfelderzeugungseinrichtung ausgegebenen Magnetfeldes mit steigendem Abstand von dieser Magnetfelderzeugungseinrichtung abnimmt, kann durch Vergleichen der Ausgangssignale der Sensoreinrichtung auf die der Sensoreinrichtung, und somit der Spannvorrichtung, am nächsten liegende Magnetfelderzeugungseinrichtung geschlossen werden. Die Position dieser Magnetfelderzeugungseinrichtung kann dann als die aktuelle Position der Spannvorrichtung entlang der Konsolenlängsachse bestimmt werden.

Die vorgeschlagene Ausgestaltung mit elektrisch ansteuerbaren Magnetfelderzeugungseinrichtungen hat gegenüber einer Ausgestaltung mit Permanentmagneten den großen Vorteil, dass eine Magnetwirkung bei Bedarf, insbesondere während einer Werkstückbearbeitung, abgeschaltet werden kann. Bei einem Einsatz des Spannsystems in der Metallbearbeitung kann so beispielsweise verhindert werden, dass Metallspäne an der Spannvorrichtung hängen bleiben und einen Betrieb beeinträchtigen. Darüber hinaus ist es denkbar, dass durch Aktivierung der Magnetfelderzeugungseinrichtungen Informationen drahtlos zwischen Konsole und Spannvorrichtung übertragen werden können, z.B. indem die Magnetfelderzeugungseinrichtungen in einem vorgegebenen Muster ("Morsecode") angesteuert werden, was dann von einer entsprechenden Auswerteeinrichtung der Spannvorrichtung ausgewertet wird. Dadurch, dass eine Positionsbestimmung über Detektion eines Magnetfeldes erfolgt, ist eine zuverlässige Positionsbestimmung auch unter staubigen oder schmutzigen Arbeitsbedingungen ermöglicht. Zudem ist die vorgeschlagene Ausgestaltung besonders kostengünstig, da nur ein (üblicherweise vergleichbare) teurer Sensor erforderlich ist.

Die Spannvorrichtung kann verschieden ausgebildet sein. Die Spannvorrichtung kann elektrisch betrieben sein. Die Spannvorrichtung kann motorisch betrieben sein. Vorzugsweise ist die Spannvorrichtung pneumatisch betätigt. Beispielsweise kann es sich bei der Spannvorrichtung um eine Unterdruckspannvorrichtung handeln. Insofern kann die Spannvorrichtung an einer Spannseite ein oder mehrere Saugöffnungen zum Ansaugen und somit Fixieren eines Gegenstands aufweisen. Bei der Spannvorrichtung kann es sich beispielsweise auch um eine druckluftbetätigte Spannvorrichtung handeln. Die Spannvorrichtung kann wenigstens ein druckluftbetätigtes Spannelement umfassen, welches durch Beaufschlagung mit Druckluft entlang einer Spannachse verlagerbar ist.

Die Spannvorrichtung kann über die Konsole mit Betriebsenergie, insbesondere Betriebsfluid, versorgbar sein. Dies kann beispielsweise dadurch realisiert sein, dass die Konsole wenigstens einen Fluidkanal für Betriebsfluid, beispielsweise Unterdruck oder Überdruck, aufweist. Der wenigstens eine Fluidkanal kann insbesondere über entsprechende Fluidauslässe an einer Konsolenoberseite oder Konsolenlängsseite ausmünden. Die Spannvorrichtung kann dann, beispielsweise an ihrer Unterseite, entsprechende Fluidanschlüsse aufweisen, welche - zumindest in bestimmten Positionen entlang der Konsolenlängsachse - mit den Fluidauslässen strömungsverbunden sind.

Es ist auch denkbar, dass die Spannvorrichtung eine, von der Konsole autarke, Energieversorgung aufweist. Beispielsweise ist es denkbar, dass die Spannvorrichtung eine Energiespeichereinrichtung zum Speichern von Betriebsenergie zum Betreiben der Spannvorrichtung umfasst. Bei der Betriebsenergie kann es sich um elektrische Energie handeln. Insofern kann die Spannvorrichtung beispielsweise eine Batterie aufweisen. Bei der Betriebsenergie kann es sich auch um Druckluft oder Unterdruck handeln. Insofern kann die Spannvorrichtung zusätzlich oder alternativ einen Druckluftspeicher oder Unterdruckspeicher aufweisen.

Die Magnetfelderzeugungseinrichtung können verschieden ausgebildet sein. Die Magnetfelderzeugungseinrichtungen können als Elektromagnet ausgebildet sein. In vorteilhafter Weise können die Magnetfelderzeugungseinrichtungen jeweils eine Spule (Erregerspule) umfassen. Insofern kann ein Magnetfeld dadurch erzeugt sein, dass die Erregerspule mit einem elektrischen Wechselfeld beaufschlagt wird. Eine solche Ausgestaltung ist einfach und kostengünstig. Vorzugsweise sind die Erregerspulen voneinander unabhängig mit Strom beaufschlagbar.

Besonders vorteilhaft ist es, wenn die Magnetfelderzeugungseinrichtungen jeweils eine Drosselspule ("Drossel") als Erregerspule umfassen. Solche Drosselspulen sind besonders kostengünstig in der Anschaffung (Massenprodukt) und im Betrieb zuverlässig.

Die Magnetfelderzeugungseinrichtungen, insbesondere Erregerspulen, können an einer Konsolenoberseite angeordnet sein. Vorzugsweise sind die Magnetfelderzeugungseinrichtungen jedoch an einer Seitenwand des Konsolengehäuses, also an einer Konsolenlängsseite, angeordnet.

Bei einer solchen Ausgestaltung kann es dann vorteilhaft sein, wenn die Spannvorrichtung einen nach unten abkragenden Arm aufweist, an welchem die Sensoreinrichtung angeordnet ist, insbesondere derart, dass die Sensoreinrichtung im auf das Konsolengehäuse aufgesetzten Zustand der Spannvorrichtung benachbart zu den Magnetfelderzeugungseinrichtungen angeordnet ist. Insofern kann die Sensoreinrichtung derart an einem von der Sensoreinrichtung abkragenden Arm angeordnet sein, dass die Sensoreinrichtung, insbesondere der Hall-Sensor, auf Höhe der Magnetfelderzeugungseinrichtungen angeordnet ist. Dies ermöglicht eine präzise Detektion des Magnetfeldes und somit eine genaue Positionsbestimmung. Der Arm kann eine Halterungsfunktion und/oder Führungsfunktion haben. Beispielsweise kann der Arm dazu ausgebildet sein, die Spannvorrichtung entlang des Konsolengehäuses zu führen. Insbesondere ist es denkbar, dass die Spannvorrichtung einen weiteren gegenüberliegenden Arm aufweist, sodass die Spannvorrichtung um aufgesetzten Zustand die Konsole mit den beiden Armen umgreift. Auf diese Weise ist eine Führungsfunktion realisiert.

Im Rahmen einer vorteilhaften Weiterbildung kann die Konsole außerdem eine Anzeigeeinrichtung zum Anzeigen einer Position der Spannvorrichtung entlang der Konsolenlängsachse umfassen.

Dies ermöglicht es, insbesondere zusätzlich zu einer Positionsbestimmung durch die Magnetfelderzeugungseinrichtungen, eine aktuelle Position der Spannvorrichtung zu visualisieren. Auf diese Weise ist eine visuelle Erkennung der Position der Spannvorrichtung, bspw. durch eine Bedienperson oder durch eine optische Detektionseinrichtung (z.B. Kamera), ermöglicht.

Die Anzeigeeinrichtung kann unterschiedlich ausgebildet sein. Beispielsweise kann die Anzeigeeinrichtung ein Display umfassen, auf welchem eine aktuelle Position der Spannvorrichtung angezeigt wird. Vorzugsweise umfasst die Anzeigeeinrichtung eine Leuchtmittel-Leiste, insbesondere LED-Leite, welche sich entlang der Konsolenlängsachse erstreckt. Die Leichtmittel-Leiste kann insbesondere an einer Seitenwand des Konsolengehäuses angeordnet sein, vorzugsweise an der Seitenwand, an der auch die Magnetfelderzeugungseinrichtungen angeordnet sind.

Besonders vorteilhaft ist es, wenn die Anzeigeeinrichtung, insbesondere die Leichtmittel-Leiste, eine Mehrzahl von Leuchteinheiten, insbesondere LEDs, aufweist, welche entlang der Konsolenlängsachse verteilt angeordnet sind. Somit kann eine aktuelle Position besonders intuitiv erkennbar visualisiert werden.

Vorzugsweise ist jeder Magnetfelderzeugungseinrichtung eine eigene Leuchteinheit zugeordnet. Im Rahmen einer besonders vorteilhaften Realisierungsform können die Magnetfelderzeugungseinrichtungen, insbesondere Erregerspulen, und/oder die Leuchteinheiten auf einem Band bereitgestellt sein, welches an einer Seitenwand des Konsolengehäuses angeordnet ist.

Das Spannsystem kann außerdem eine oder mehrere Steuereinrichtungen umfassen. Wenn nachfolgend verschiedene Steuereinrichtungen beschrieben werden, kann es sich hierbei um separat ausgebildete Steuereinrichtungen handeln. Es kann sich aber auch um verschiedene Implementierungen der gleichen Steuereinrichtung handeln. Die Steuereinrichtung(en) können in die Konsole integriert sein. Die Steuereinrichtung(en) können auch in die Spannvorrichtung integriert sein. Die Steuereinrichtung(en) können auch von der Konsole und der Spannvorrichtung separat bereitgestellt sein, bspw. als Teil einer übergeordneten Steuereinheit einer Bearbeitungsmaschine, in welche das Spannsystem integriert ist. Die Steuereinrichtung(en) weisen vorzugsweise eine nicht-flüchtige Speichereinrichtung auf, auf welcher Steueranweisungen für die Steuereinrichtung gespeichert sind.

Vorzugsweise umfasst die Steuereinrichtung eine Auswerteeinrichtung zur Auswertung von Ausgangsignalen der Sensoreinrichtung. Die Auswerteeinrichtung wirkt insbesondere mit der Sensoreinrichtung zusammen. Insofern kann die Sensoreinrichtung dazu ausgebildet sein, ein Ausgangssignal an die Auswerteeinrichtung zu übermitteln.

Bei vorteilhaften Ausgestaltungen kann das Spannsystem eine Steuereinrichtung umfassen, welche dazu ausgebildet ist, in Abhängigkeit eines Ausgangssignals der Sensoreinrichtung, insbesondere des Hall-Sensors, die Anzeigeeinrichtung anzusteuern, insbesondere derart, dass die einer jeweiligen Position entsprechende Leuchteinheit aktiviert wird. Die Steuereinrichtung kann insofern mit der Sensoreinrichtung (Hall-Sensor) zusammenwirken.

Alternativ oder zusätzlich kann die Steuereinrichtung dazu eingerichtet sein, die Magnetfelderzeugungseinrichtungen anzusteuern. Bei einer Ausgestaltung der Magnetfelderzeugungseinrichtungen als Erregerspulen kann die Steuereinrichtung insbesondere dazu eingerichtet sein, die Erregerspulen mit Strom zu beaufschlagen.

Im Rahmen einer vorteilhaften Weiterbildung kann die Steuereinrichtung dazu eingerichtet sein, insbesondere in einem Positionsbestimmungs-Modus, die Magnetfelderzeugungseinrichtungen zu zeitlich aufeinanderfolgenden Aktivierungszeitpunkten (also zeitlich nacheinander) zu aktivieren, insbesondere in der entlang der Konsolenlängsrichtung angeordneten Reihenfolge. Dies ermöglicht es, durch Vergleichen eines zu einem jeweiligen Aktivierungszeitpunkt von der Sensoreinrichtung detektierten Magnetfeldes eine Position der Spannvorrichtung entlang der Konsolenlängsachse zu bestimmen.

Eine Positionsbestimmung kann beispielsweise dadurch realisiert sein, dass die Steuereinrichtung dazu eingerichtet ist, insbesondere in einem Positionsbestimmungs-Modus, die folgenden Schritte durchzuführen:
- Aktivieren der Magnetfelderzeugungseinrichtungen zu zeitlich aufeinanderfolgenden Aktivierungszeitpunkten;
- Ermitteln, insbesondere mittels der Auswerteeinrichtung, eines Positionssignals in Abhängigkeit eines zu den jeweiligen Aktivierungszeitpunkten oder diesen zugeordneten Sensorzeitpunkten von der Sensoreinrichtung ausgegebenen Ausgangssignals, wobei das Positionssignal eine aktuelle Position der Spannvorrichtung entlang der Konsolenlängsachse repräsentiert.

Bei einem Sensorzeitpunkt kann es sich insbesondere um einen zu einem jeweiligen Aktivierungszeitpunkt zeitlich versetzten Zeitpunkt handeln.

Die Ausgangssignale repräsentieren insbesondere ein von der Sensoreinrichtung erfasstes Magnetfeld. Vorzugsweise umfassen die Ausgangssignale Informationen zu einer Stärke, Richtung und/oder Frequenz des erfassten Magnetfeldes.

Insbesondere umfasst das Ermitteln des Positionssignals das Vergleichen der zu den Aktivierungszeitpunkten oder Sensorzeitpunkten ausgegebenen Ausgangssignale. Da eine Stärke des Magnetfeldes mit steigendem Abstand von der Magnetfelderzeugungseinrichtung abnimmt, kann auf diese Weise ermittelt werden, welche der Magnetfelderzeugungseinrichtungen der Sensoreinrichtung am nächsten liegt. Insbesondere wird bei Aktivierung der der Sensoreinrichtung am nächsten liegenden Magnetfelderzeugungseinrichtung das stärkste Magnetfeld von der Sensoreinrichtung detektiert. Insofern wird vorzugsweise die Position derjenigen Magnetfelderzeugungseinrichtung entlang der Konsolenlängsachse als aktuelle Position der Spannvorrichtung ermittelt, zu deren Aktivierungszeitpunkt (bzw. Sensorzeitpunkt) das Ausgangssignal der Sensoreinrichtung einen (relativen) Maximalwert oder Minimalwert eingenommen hat.

Im Rahmen einer vorteilhaften Weiterbildung mit Anzeigeeinrichtung kann die Steuereinrichtung außerdem dazu eingerichtet sein, die dieser Magnetfelderzeugungseinrichtung zugeordnete Leuchteinheit zu aktivieren.

Bei Ausgestaltungen der Magnetfelderzeugungseinrichtungen mit Erregerspule kann die Steuereinrichtung auch dazu eingerichtet sein, die Erregerspulen mit unterschiedlichen Frequenzen zu betreiben. Insbesondere kann die Steuereinrichtung dazu eingerichtet sein, die Erregerspulen mit elektrischen Wechselfeldern unterschiedlicher Frequenz zu beaufschlagen. Dies ermöglicht es - zusätzlich zu einer Positionsbestimmung - durch Aktivieren der Spulen mit unterschiedlichen Frequenzen ("Morsecode"), Informationen zwischen Konsole und Spannvorrichtung zu übertragen. Beispielsweise ist es denkbar, dass eine Steuereinrichtung der Spannvorrichtung dazu eingerichtet ist, Ausgangssignale der Sensoreinrichtung in Steuerinformationen zum Ansteuerung der Spannvorrichtung zu übersetzen.

Bei Ausgestaltungen mit Erregerspulen kann eine Positionsbestimmung gemäß einem zweiten Aspekt dadurch realisiert sein, dass die Steuereinrichtung dazu eingerichtet ist, folgende Schritte durchzuführen:
- Betreiben der Erregerspulen (zeitgleich oder nacheinander] mit unterschiedlichen Frequenzen. Insbesondere wird jede Erregerspule mit einer unterschiedlichen Frequenz betrieben.;
- Ermitteln eines Positionssignals in Abhängigkeit eines zu einem Sensorzeitpunkt während des Betreibens der Erregerspulen von der Sensoreinrichtung ausgegebenen Ausgangssignals. Wie vorstehend erwähnt, repräsentiert das Positionssignal insbesondere eine aktuelle Position der Spannvorrichtung entlang der Konsolenlängsachse.

Das Ermitteln des Positionssignals kann insbesondere das Empfangen eines zu einem Sensorzeitpunkt während des Betreibens der Erregerspulen von der Sensoreinrichtung ausgegebenes Ausgangssignal umfassen. Das Ausgangssignal kann insbesondere Informationen zu einer Frequenz des erfassten Magnetfelds umfassen.

Das Ermitteln des Positionssignals kann das Vergleichen des zu dem Sensorzeitpunkt ausgegebenen Ausgangssignals der Sensoreinrichtung mit zuvor in einer nicht-flüchtigen Speichereinrichtung der Steuereinrichtung hinterlegten Referenz-Ausgangssignalen umfassen. Beispielsweise ist es denkbar, dass auf der Speichereinrichtung Referenz-Ausgangssignale hinterlegt sind, welche ein jeweiliges Ausgangsignal der Sensoreinrichtung bei Betreiben einer Erregerspule mit unterschiedlichen Frequenzen repräsentieren.

Es ist auch denkbar, dass das Ausgangssignal der Sensoreinrichtung Informationen zu einer Frequenz des detektierten Magnetfeldes umfasst. Insofern kann das Ermitteln des Positionssignals das Ermitteln derjenigen Magnetfelderzeugungseinrichtung umfassen, welche zuvor mit der der von der Sensoreinrichtung detektierten Frequenz betrieben wurde. Die Position dieser Magnetfelderzeugungseinrichtung entlang der Konsolenlängsachse kann dann wieder als aktuelle Position der Spannvorrichtung ermittelt werden.

Die eingangs genannte Aufgabe wird auch durch eine Spannvorrichtung gelöst, welche zur Verwendung in einem vorstehend beschriebenen Spannsystem ausgebildet ist.

Die vorstehend in Bezug auf das Spannsystem beschriebenen Vorteile und optionalen Merkmale können auch zur Ausgestaltung der Spannvorrichtung dienen. Die Spannvorrichtung ist insofern insbesondere zum Aufsetzen auf eine Konsole ausgebildet. Die Spannvorrichtung ist zum Spannen und damit Fixieren eines Werkstücks ausgebildet. Die Spannvorrichtung umfasst eine Sensoreinrichtung, insbesondere Hall-Sensor, zum Detektieren eines Magnetgeldes. Die Spannvorrichtung kann einen abkragenden Arm aufweisen, an welchem die Sensoreinrichtung angeordnet ist. Die Spannvorrichtung kann eine mit der Sensoreinrichtung zusammenwirkenden Steuereinrichtung umfassen. Die Spannvorrichtung kann pneumatisch betätigt sein. Die Spannvorrichtung kann eine Unterdruckspannvorrichtung oder Unterdrucksaugvorrichtung sein. Die Spannvorrichtung kann ein druckluftbetätigtes Spannelement aufweisen. Die Spannvorrichtung kann eine autarke Energieversorgung aufweisen. Die Spannvorrichtung kann einen Energiespeicher zum Speichern von elektrischer Energie, insbesondere Batterie, aufweisen. Die Spannvorrichtung kann einen Unterdruckspeicher- oder Überdruckspeicher aufweisen. Die Spannvorrichtung kann an einer Unterseite einen Fluidanschluss zur Kommunikation mit einem Fluidauslass der Konsole aufweisen. Die Spannvorrichtung kann eine Kommunikationseinrichtung zur drahtlosen Kommunikation, insbesondere mittels Funk, mit einer externen Steuereinheit umfassen, bspw. mit einer Steuereinheit einer Werkzeugmaschine, in welche das Spannsystem eingebaut ist.

Die eingangs genannte Aufgabe wird auch durch eine Konsole gelöst, welche zur Verwendung in einem vorstehend beschriebenen Spannsystem ausgebildet ist. Insofern weist die Konsole ein Konsolengehäuse auf, welches sich entlang einer Konsolenlängsachse erstreckt. Die Konsole umfasst eine Mehrzahl von Magnetfelderzeugungseinrichtungen, welche entlang der Konsolenlängsachse verteilt angeordnet sind. Das Konsolengehäuse ist zum Aufsetzen einer Spannvorrichtung ausgebildet. Insbesondere weist das Konsolengehäuse eine Konsolenoberseite und eine, insbesondere zu der Konsolenoberseite orthogonal verlaufenden, Seitenwand auf.

Die vorstehend in Bezug auf das Spannsystem beschriebenen Vorteile und optionalen Merkmale können auch zur Ausgestaltung der Konsole dienen. Die Konsole kann eine Anzeigeeinrichtung, insbesondere Leuchtmittel-Leiste, weiter insbesondere LED-Leiste, aufweisen. Die Konsole kann eine Steuereinrichtung zur Ansteuerung der Magnetfelderzeugungseinrichtungen aufweisen. Die Konsole kann wenigstens einen Kanal für Betriebsfluid, insbesondere Unterdruck oder Überdruck, aufweisen. Der wenigstens Kanal kann über wenigstens einen Fluidauslass an einer Konsolenoberseite des Konsolengehäuses ausmünden. Die Konsole kann eine Führungseinrichtung, beispielsweise Führungsnut, zur Führung einer Spannvorrichtung entlang der Konsolenlängsachse umfassen.

Die Erfindung betrifft auch ein Verfahren zum Betreiben eines vorstehend beschriebenen Spannsystems umfassend:
- Aktivieren der Magnetfelderzeugungseinrichtungen zeitlich nacheinander;
- Detektieren eines von der jeweiligen Magnetfelderzeugungseinrichtung ausgesandten Magnetfeldes mittels der Sensoreinrichtung;
- Ermitteln einer Position der Spannvorrichtung entlang der Konsolenlängsachse in Abhängigkeit eines jeweiligen von der Sensoreinrichtung detektierten Magnetfeldes, insbesondere in Abhängigkeit einer jeweiligen von der Sensoreinrichtung detektierten Magnetfeldstärke.

Die Erfindung betrifft auch ein Verfahren zum Betreiben eines vorstehend beschriebenen Spannsystems, wobei die Magnetfelderzeugungseinrichtungen jeweils eine Erregerspule aufweisen, das Verfahren umfassend:
- Betreiben der Erregerspulen, insbesondere gleichzeitig, mit unterschiedlichen Frequenzen. Insbesondere wird jede Erregerspule mit einer unterschiedlichen Frequenz betrieben;
- Detektieren eines von der jeweiligen Magnetfelderzeugungseinrichtung ausgesandten Magnetfeldes mittels der Sensoreinrichtung;
- Ermitteln einer Position der Spannvorrichtung entlang der Konsolenlängsachse in Abhängigkeit eines jeweiligen von der Sensoreinrichtung detektierten Magnetfeldes, insbesondere in Abhängigkeit einer jeweiligen von der Sensoreinrichtung detektierten Magnetfeldstärke.

Eine Positionsdetektionseinrichtung der vorstehend beschriebenen Art mit Sensoreinrichtung und Magnetfelderzeugungseinrichtungen kann auch zur Bestimmung einer Position der Konsole auf einem Konsolenträger verwendet werden, bspw. zur Positionsbestimmung der Konsole auf einem Maschinenbett einer Bearbeitungsmaschine, in welche das Spannsystem integriert ist.

Die Erfindung betrifft insofern auch ein Konsolensystem umfassend eine Konsole für eine Spannvorrichtung, und einen Konsolenträger, insbesondere Maschinenbett. Die Konsole ist in verschiedenen Positionen auf dem Konsolenträger, insbesondere einer Anlagefläche des Konsolenträgers, anordenbar, insbesondere aufsetzbar oder aufgesetzt. Die Konsole kann auch an dem Konsolenträger verschiebbar gehaltert sein. Der Konsolenträger kann eine Mehrzahl von elektrisch betriebenen Magnetfelderzeugungseinrichtungen jeweils zum Erzeugen eines Magnetfeldes aufweisen. Die Magnetfelderzeugungseinrichtungen sind insbesondere voneinander unabhängig (einzeln) aktivierbar und deaktivierbar. Die Magnetfelderzeugungseinrichtungen sind insbesondere über den Konsolenträger, insbesondere über eine Anlagefläche zur Anlage der Konsole, verteilt angeordnet. Die Konsole kann eine Sensoreinrichtung zum Detektieren eines von einer jeweiligen Magnetfelderzeugungseinrichtung (bei Aktivierung) erzeugten Magnetfeldes aufweisen. Die Sensoreinrichtung umfasst vorzugsweise einen Magnetfeldsensor, insbesondere Hall-Sensor. Die vorstehend in Bezug auf das Spannsystem beschriebenen Vorteile und vorteilhaften Ausgestaltungen können auch zur Ausgestaltung des Konsolensystems dienen.

Im Rahmen einer vorteilhaften Weiterbildung kann das Konsolensystem eine Anzeigeeinrichtung zum Anzeigen einer Position der Konsole auf dem Konsolenträger umfassen. Die Anzeigeeinrichtung kann unterschiedlich ausgebildet sein. Beispielsweise kann die Anzeigeeinrichtung ein Display umfassen, auf welchem eine aktuelle Position der Konsole angezeigt wird. Vorzugsweise umfasst die Anzeigeeinrichtung eine Mehrzahl von Leichteinheiten, insbesondere LEDs, welche über den Konsolenträger, insbesondere eine Anlagefläche zur Anlage der Konsole, verteilt angeordnet sind. Vorzugsweise ist jeder Magnetfelderzeugungseinrichtung eine eigene Leuchteinheit zugeordnet. Die vorstehend in Bezug auf das Spannsystem beschriebenen Vorteile und vorteilhaften Ausgestaltungen der Anzeigeeinrichtung können auch zur Ausgestaltung des Konsolensystems dienen.

Vorzugsweise umfasst das Konsolensystem eine Steuereinrichtung zur Ansteuerung der Magnetfelderzeugungseinrichtungen und/oder der Sensoreinrichtung. Die vorstehend in Bezug auf das Spannsystem beschriebenen Ausgestaltungen der Steuereinrichtung können in analoger Weise zur Ausgestaltung der Steuereinrichtung des Konsolensystems dienen, sodass zur Vermeidung von Wiederholungen auf vorstehende Offenbarung hierzu verwiesen wird.

Wie vorstehend beschrieben, kann auf die Konsole eine Spannvorrichtung aufgesetzt sein. Insofern betrifft die Erfindung auch eine Bearbeitungsanlage umfassend
- eine, insbesondere pneumatisch betätigte, Spannvorrichtung zum Fixieren eines Werkstücks,
- eine Konsole mit einem sich entlang einer Konsolenlängsrichtung erstreckenden Konsolengehäuse, wobei die Spannvorrichtung auf das Konsolengehäuse aufsetzbar ist und im aufgesetzten Zustand entlang der Konsolenlängsrichtung verschiebbar ist,
- einen Konsolenträger, auf welchem die Konsole anordenbar, insbesondere aufsetzbar oder aufgesetzt, ist.

Es ist denkbar, dass, wie vorstehend im Zusammenhang mit dem Spannsystem beschrieben, die Spannvorrichtung eine Sensoreinrichtung und die Konsole eine Mehrzahl von Magnetfelderzeugungseinrichtung aufweist. Alternativ oder zusätzlich ist es auch denkbar, dass, wie vorstehend im Zusammenhang mit dem Konsolensystem beschrieben, die Konsole eine Sensoreinrichtung und der Konsolenträger eine Mehrzahl von Magnetfelderzeugungseinrichtung aufweist.

Die Erfindung wird im Folgenden anhand der Figuren näher erläutert. Es zeigen
- Figur 1: vereinfachte schematische Darstellung eines Spannsystems gemäß einer ersten Ausführungsform in einer Seitenansicht;
- Figur 2: das Spannsystem gemäß Fig. 1 in einem Querschnitt;
- Figur 3: vereinfachte schematische Darstellung eines Spannsystems gemäß einer zweiten Ausführungsform in einer Seitenansicht.

In der nachfolgenden Beschreibung sowie in den Figuren sind für identische oder einander entsprechende Merkmale jeweils dieselben Bezugszeichen verwendet.

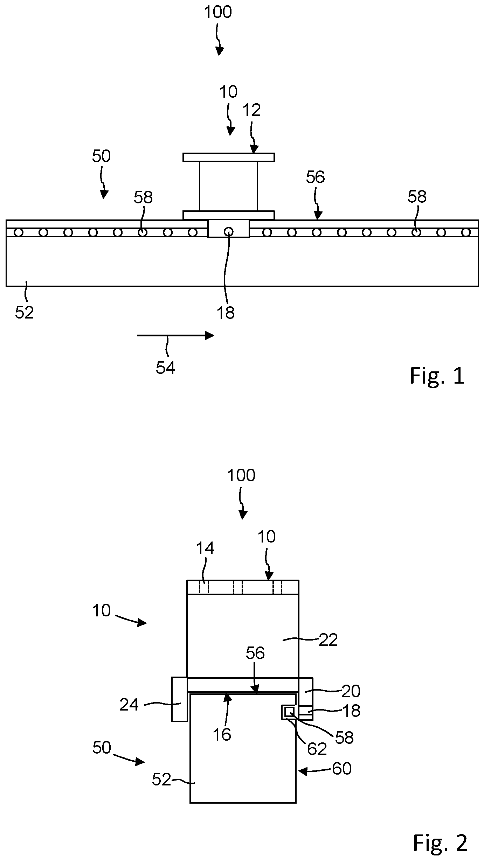

Die Figur 1 zeigt in skizzierter Darstellung eine Ausgestaltung eines Spannsystems, welches insgesamt mit dem Bezugszeichen 100 bezeichnet ist. Das Spannsystem 100 umfasst eine Spannvorrichtung 10 und eine Konsole 50.

Die Figur 1 zeigt dabei das Spannsystem 100 in einer Betriebskonfiguration, in welcher die Spannvorrichtung 10 auf die Konsole 50 aufgesetzt ist.

Die Spannvorrichtung 10 ist zum Fixieren eines Gegenstands (nicht dargestellt), bspw. eines Werkstücks, an einer Anlageseite 12 ausgebildet. Derartige Spannvorrichtung 10 sind grundsätzlich aus dem Stand der Technik bekannt und werden daher im Folgenden nicht im Detail beschrieben. Beispielhaft kann die Spannvorrichtung 10 als Unterdruckspannvorrichtung ausgebildet sein, welche an der Anlageseite 12 eine Mehrzahl von Saugöffnungen 14 aufweist (vgl. Figur 2). Zur Versorgung der Saugöffnungen 14 mit Unterdruck kann in der Spannvorrichtung 10 eine Unterdruckkammer (nicht dargestellt) vorgesehen sein. Die Unterdruckkammer kann mit einer externen Unterdruckversorgung strömungsverbunden sein. Beispielsweise ist es denkbar, dass die Spannvorrichtung 10 einen Unterdruckanschluss zum Anschluss an eine Unterdruckversorgungsleitung aufweist. Es ist auch denkbar, dass die Spannvorrichtung 10, bspw. an einer der Konsole 50 zugewandten Unterseite 16, einen oder mehrere Fluidanschlüsse aufweist, welche zur Verbindung mit entsprechenden Fluidauslässen an der Konsole 50 (bspw. Fluidauslässe eines in der Konsole 50 integrierten Fluidkanals (nicht dargestellt)) ausgebildet sind. Es ist auch denkbar, dass die Spannvorrichtung 10 eine integrierte Unterdruckerzeugungseinrichtung, bspw. elektrisch betriebene Pumpe, aufweist.

Die Konsole 50 weist ein Konsolengehäuse 52 auf, welches sich entlang einer Konsolenlängsrichtung 54 erstreckt. Das Konsolengehäuse 52 kann beispielhaft als Strangpressprofil ausgebildet sein. Wie vorstehend erwähnt, kann das Konsolengehäuse 52 optional einen oder mehrere innenliegende Fluidkanäle zur Versorgung der Spannvorrichtung 10 mit Betriebsfluid, z.B. Unterdruck, aufweisen.

Wie in Figur 1 gezeigt, ist die Spannvorrichtung 10 in der Betriebskonfiguration mit ihrer Unterseite 16 auf einer Konsolenoberseite 56 des Konsolengehäuses 52 aufgesetzt und im aufgesetzten Zustand entlang der Konsolenlängsachse 54 verschiebbar.

Die Konsole 50 weist eine Mehrzahl von Magnetfelderzeugungseinrichtungen 58 auf, welche entlang der Konsolenlängsachse 54, im Beispiel gleichmäßig, verteilt angeordnet sind.

Die Magnetfelderzeugungseinrichtungen 58 sind bedarfsweise aktivierbar oder deaktivierbar ausgebildet. Vorzugsweise sind die Magnetfelderzeugungseinrichtungen 58 elektrisch betrieben. Insbesondere weisen die Magnetfelderzeugungseinrichtungen 58 jeweils eine Erregerspule (nicht dargestellt) auf.

Die Magnetfelderzeugungseinrichtungen 58 sind im Beispiel an einer Seitenwand 60 des Konsolengehäuses 52 angeordnet. Wie in Figur 2 gezeigt, können die Magnetfelderzeugungseinrichtungen 58 beispielsweise in einer in der Seitenwand 60 ausgebildeten Nut 62 angeordnet sein.

Die Spannvorrichtung 10 weist eine Sensoreinrichtung 18 zum Detektieren eines von den Magnetfelderzeugungseinrichtungen 58 ausgesandten Magnetfeldes auf. Die Sensoreinrichtung 18 umfasst insbesondere einen Hall-Sensor.

Beispielhaft und bevorzugt ist die Sensoreinrichtung 18 an einem Arm 20 der Spannvorrichtung 10 angeordnet, welcher sich von einem Basiskörper 22 der Spannvorrichtung in Richtung Konsole 50 weg erstreckt. Wie aus Figur 2 ersichtlich, ist der Arm 20 vorzugsweise derart ausgebildet, dass er im aufgesetzten Zustand der Spannvorrichtung 10 auf der Konsole 50 parallel zur Seitenwand 60 des Konsolengehäuses 52 angeordnet ist. Die Sensoreinrichtung 18 ist dabei vorzugsweise derart angeordnet, dass sie auf der gleichen Höhe mit den Magnetfelderzeugungseinrichtungen 58 angeordnet ist.

Im konkreten Beispiel umfasst die Spannvorrichtung 10 außerdem einen optionalen zweiten Arm 24, welcher dem vorstehend beschriebenen Arm 20 mit Sensoreinrichtung 18 gegenüberliegt. Die Spannvorrichtung 10 umgreift insofern im aufgesetzten Zustand die Konsole 50 mit den beiden Armen 20, 24. Die Arme 20, 24 können insbesondere eine Führungseinrichtung zur Führung einer Verschiebebewegung der Spannvorrichtung entlang der Konsolenlängsachse 54 bilden.

Wie vorstehend erwähnt, kann durch Detektion eines von den Magnetfelderzeugungseinrichtungen 58 ausgegebenen Magnetfeldes mittels der Sensoreinrichtung 18 auf eine Position der Spannvorrichtung 10 entlang der Konsolenlängsachse 54 geschlossen werden.

Im Rahmen einer beispielhaften Realisierungsform können zur Positionsbestimmung die Magnetfelderzeugungseinrichtungen 58 zeitlich nacheinander, insbesondere in der entlang der Konsolenlängsachse 54 angeordneten Reihenfolge, aktiviert werden und das jeweils erzeugte Magnetfeld mittels der Sensoreinrichtung 18 detektiert werden. Da eine Stärke des Magnetfeldes mit steigendem Abstand von der Magnetfelderzeugungseinrichtung 58 abnimmt, kann durch Vergleichen der Ausgangssignale der Sensoreinrichtung 18 ermittelt werden, welche der Magnetfelderzeugungseinrichtungen der Sensoreinrichtung 18 am nächsten liegt. Insbesondere wird bei Aktivierung der der Sensoreinrichtung 18 am nächsten liegenden Magnetfelderzeugungseinrichtung 58 das stärkste Magnetfeld von der Sensoreinrichtung 18 detektiert. Insofern kann ein Ausgangssignal der Sensoreinrichtung 18 dann einen relativen Minimalwert oder Maximalwert einnehmen. Die Position dieser Magnetfelderzeugungseinrichtung 58 entlang der Konsolenlängsachse 54 kann dann als die aktuelle Position der Spannvorrichtung 10 entlang der Konsolenlängsachse 54 bestimmt werden.

Gemäß einer alternativen Realisierungsform ist es auch möglich, dass die Magnetfelderzeugungseinrichtungen 58 bzw. die Erregerspulen mit unterschiedlichen Frequenzen betrieben werden. Da, wie vorstehend erwähnt, eine Stärke des Magnetfeldes mit steigendem Abstand von der Magnetfelderzeugungseinrichtung 58 abnimmt, wird von der Sensoreinrichtung 18 hauptsächlich das Magnetfeld derjenigen Magnetfelderzeugungseinrichtung 58 detektiert, welche der Sensoreinrichtung 18 und somit der Spannvorrichtung 10 am nächsten liegt. Durch Vergleichen mit Referenz-Ausgangssignalen kann dann ermittelt werden, um welche der Magnetfelderzeugungseinrichtungen 58 es sich handelt. Beispielsweise ist es denkbar, dass das Ausgangssignal der Sensoreinrichtung 18 Informationen zu einer Frequenz des detektierten Magnetfeldes umfasst. Insofern kann über die detektierte Frequenz auf die nächstliegende Magnetfelderzeugungseinrichtung 58 geschlossen werden. Die Position dieser Magnetfelderzeugungseinrichtung 58 entlang der Konsolenlängsachse 54 kann dann wieder als die aktuelle Position der Spannvorrichtung 10 entlang der Konsolenlängsachse 54 bestimmt werden.

Wie vorstehend erwähnt, kann das Spannsystem 100 eine Steuereinrichtung (nicht dargestellt) aufweisen, welche dazu eingerichtet ist, die vorstehend beschriebenen Verfahren zur Positionsbestimmung durchzuführen. Die Steuereinrichtung kann in die Spannvorrichtung 10 integriert sein. Die Steuereinrichtung kann auch in die Konsole 50 integriert sein. Die Steuereinrichtung kann auch eine externe Steuereinrichtung sein, bspw. eine Steuereinheit einer Bearbeitungsmaschine, z.B. Werkzeugmaschine, in welche das Spannsystem eingebaut ist.

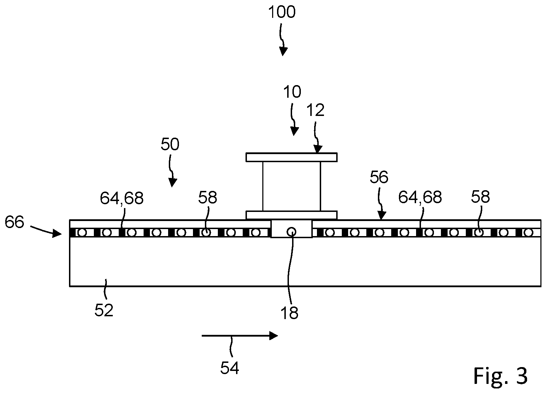

Die Figur 3 zeigt eine weitere beispielhafte Ausführungsform, welche sich von der in den Figuren 1 und 2 gezeigten Ausführungsform lediglich dahingehend unterscheidet, dass die Konsole 50 zusätzlich eine Anzeigeeinrichtung 64 aufweist. Im Übrigen entspricht die Ausgestaltung gemäß Figur 3 der Ausgestaltung gemäß Figur 1, sodass zur Vermeidung von Wiederholungen auf vorstehende Offenbarung verwiesen wird (funktionsgleiche Bauteile sind mit identischen Bezugszeichen versehen).

Die Anzeigeeinrichtung 64 ist dazu ausgebildet, eine Position der Spannvorrichtung 10 entlang der Konsolenlängsachse 54 zu visualisieren. Die Anzeigeeinrichtung 64 umfasst eine Leuchtmittel-Leiste 66, welche eine Mehrzahl von Leuchteinheiten 68, insbesondere in Form von LEDs, umfasst. Die Leuchteinheiten 68 sind vorzugsweise entlang der Konsolenlängssachse 54 verteilt angeordnet.

Im Beispiel ist die Leuchtmittel-Leiste an der Seitenwand 60 angeordnet, an welcher auch die Magnetfelderzeugungseinrichtungen 58 angeordnet sind. Die Leuchteinheiten 68 können insbesondere auch in der Nut 62 angeordnet sein. Im Rahmen einer vorteilhaften Ausgestaltung können die Leichteinheiten 68 und die Magnetfelderzeugungseinrichtungen 58 (insbesondere die Erregerspulen) auf einem Band bereitgestellt sein, welches an der Seitenwand 60, insbesondere in der Nut 62, des Konsolengehäuses 52 angeordnet ist.

Beispielhaft und bevorzugt ist jeder Magnetfelderzeugungseinrichtung 58 eine eigene Leuchteinheit 68 zugeordnet. Ist, wie vorstehend beschrieben, diejenige Magnetfelderzeugungseinrichtung 58 ermittelt worden, die benachbart zu der Spannvorrichtung 10 angeordnet ist, kann dann in vorteilhafter Weise die dieser Magnetfelderzeugungseinrichtung 58 zugeordnete Leuchteinheit 68 aktiviert werden.

## Patentansprüche

1. Spannsystem (100), umfassend
- eine, insbesondere pneumatisch betätigte, Spannvorrichtung (10) zum Fixieren eines Werkstücks, und
- eine Konsole (50) mit einem sich entlang einer Konsolenlängsrichtung (54) erstreckenden Konsolengehäuse (52),
wobei die Spannvorrichtung (10) auf das Konsolengehäuse (52) aufsetzbar ist und im aufgesetzten Zustand entlang der Konsolenlängsrichtung (54) verschiebbar ist, **dadurch gekennzeichnet, dass**
die Konsole (50) eine Mehrzahl von elektrisch betriebenen Magnetfelderzeugungseinrichtungen (58), insbesondere jeweils umfassend eine Erregerspule, aufweist,
dass die Magnetfelderzeugungseinrichtungen (58) entlang der Konsolenlängsrichtung (54) verteilt angeordnet sind, und
dass die Spannvorrichtung (10) eine Sensoreinrichtung (18), insbesondere umfassend einen Hall-Sensor, zum Detektieren eines von den Magnetfelderzeugungseinrichtungen (58) erzeugten Magnetfeldes umfasst.

2. Spannsystem nach Anspruch 1, wobei die Magnetfelderzeugungseinrichtungen (58) jeweils eine Drosselspule als Erregerspule umfassen.

3. Spannsystem nach einem der vorherigen Ansprüche, wobei die Magnetfelderzeugungseinrichtungen (58), insbesondere Erregerspulen, an einer Seitenwand (60) des Konsolengehäuses (52) angeordnet sind.

4. Spannsystem nach dem vorherigen Anspruch, wobei die Spannvorrichtung (10) einen abkragenden Arm (20) aufweist, an welchem die Sensoreinrichtung (18) derart angeordnet ist, dass die Sensoreinrichtung (18) im aufgesetzten Zustand der Spannvorrichtung (10) benachbart zu den Magnetfelderzeugungseinrichtungen (58) angeordnet ist.

5. Spannsystem nach einem der vorherigen Ansprüche, wobei die Konsole (50) außerdem eine Anzeigeeinrichtung (64), insbesondere Leuchtmittel-Leiste, weiter insbesondere LED-Leite, zum Anzeigen einer Position der Spannvorrichtung (10) entlang der Konsolenlängsachse (54) umfasst.

6. Spannsystem nach dem vorherigen Anspruch, wobei die Anzeigeeinrichtung (64) eine Mehrzahl von Leuchteinheiten (68), insbesondere LEDs, aufweist, welche entlang der Konsolenlängsachse (54) verteilt angeordnet sind, insbesondere wobei jeder Magnetfelderzeugungseinrichtung (58) eine Leuchteinheit (68) zugeordnet ist.

7. Spannsystem nach einem der Ansprüche 5 oder 6, außerdem umfassend eine Steuereinrichtung, welche dazu ausgebildet ist, in Abhängigkeit eines Ausgangssignals der Sensoreinrichtung (18), insbesondere Hall-Sensor, die Anzeigeeinrichtung (64) anzusteuern.

8. Spannsystem nach einem der vorherigen Ansprüche, außerdem umfassend eine Steuereinrichtung zum Ansteuern der Magnetfelderzeugungseinrichtungen (58), wobei die Steuereinrichtung insbesondere dazu eingerichtet ist, die Magnetfelderzeugungseinrichtungen (58) zu zeitlich aufeinanderfolgenden Aktivierungszeitpunkten zu aktivieren.

9. Spannsystem nach dem vorherigen Anspruch, wobei die Steuereinrichtung eine Auswerteeinrichtung zur Auswertung von Ausgangsignalen der Sensoreinrichtung (18) umfasst, wobei die Steuereinrichtung dazu eingerichtet ist, die folgenden Schritte durchzuführen:
- Aktivieren der Magnetfelderzeugungseinrichtungen (58) zu zeitlich aufeinanderfolgenden Aktivierungszeitpunkten;
- Ermitteln eines Positionssignals in Abhängigkeit eines zu den jeweiligen Aktivierungszeitpunkten oder diesen zugeordneten Sensorzeitpunkten von der Sensoreinrichtung (18) ausgegebenen Ausgangssignals, wobei das Positionssignal eine aktuelle Position der Spannvorrichtung (10) entlang der Konsolenlängsachse (54) repräsentiert.

10. Spannsystem nach dem vorherigen Anspruch, wobei das Ermitteln des Positionssignals das Vergleichen der zu den Aktivierungszeitpunkten oder Sensorzeitpunkten ausgegebenen Ausgangssignale umfasst, wobei als aktuelle Position der Spannvorrichtung (10) die Position derjenigen Magnetfelderzeugungseinrichtung (58) entlang der Konsolenlängsachse (54) ermittelt wird, zu deren Aktivierungszeitpunkt das Ausgangssignal der Sensoreinrichtung (18) einen Maximalwert oder Minimalwert eingenommen hat.

11. Spannsystem nach Anspruch 8, wobei die Magnetfelderzeugungseinrichtungen (58) jeweils eine Erregerspule aufweisen, wobei die Steuereinrichtung dazu eingerichtet ist, die Erregerspulen mit unterschiedlichen Frequenzen zu betreiben.

12. Spannsystem nach dem vorherigen Anspruch, wobei die Steuereinrichtung eine Auswerteeinrichtung zur Auswertung von Ausgangsignalen der Sensoreinrichtung (18) umfasst, wobei die Steuereinrichtung dazu eingerichtet ist, die folgenden Schritte durchzuführen:
- Betreiben der Erregerspulen mit unterschiedlichen Frequenzen;
- Ermitteln eines Positionssignals in Abhängigkeit eines zu einem Sensorzeitpunkt während des Betreibens der Erregerspulen von der Sensoreinrichtung (18) ausgegebenen Ausgangssignals, wobei das Positionssignal eine aktuelle Position der Spannvorrichtung (10) entlang der Konsolenlängsachse (54) repräsentiert.

13. Spannvorrichtung (10) zur Verwendung in einem Spannsystem (100) gemäß einem der vorherigen Ansprüche.

14. Konsole (50) zur Verwendung in einem Spannsystem (100) gemäß einem der Ansprüche 1 bis 12.

15. Konsolensystem, umfassend
- eine Konsole für eine Spannvorrichtung, und
- einen Konsolenträger, auf welchem die Konsole in verschiedenen Positionen anordenbar ist,
**dadurch gekennzeichnet, dass**
der Konsolenträger eine Mehrzahl von elektrisch betriebenen Magnetfelderzeugungseinrichtungen, insbesondere jeweils umfassend eine Erregerspule, aufweist,
dass die Magnetfelderzeugungseinrichtungen über den Konsolenträger verteilt angeordnet sind, und
dass die Konsole eine Sensoreinrichtung, insbesondere umfassend einen Hall-Sensor, zum Detektieren eines von den Magnetfelderzeugungseinrichtungen erzeugten Magnetfeldes umfasst.
